# FASCICULE DE BREVET EUROPEEN

(11) **EP 2 458 158 B1**
(45) Date de publication et mention de la délivrance du brevet: **21.08.2013**
(21) Numéro de dépôt: 10192391.0
(22) Date de dépôt: 24.11.2010
(51) Int. Cl.: F01D 11/04, F01D 25/18, F02C 7/06

(54) **Dispositif de lubrification de turbomachine**
Schmieranordnung für Turbotriebwerk
Lubrication system for a turbomachine

(43) Date de publication de la demande: 30.05.2012
(73) Titulaire: Techspace Aero S.A., 4041 Milmort (BE)
(72) Inventeur: Raimarckers, Nicolas, 4263 Tourinne (BE); Cornet, Albert, 4800 Vervieres (BE); Houziaux, Steve, 92110 Clichy La Garenne (FR); Servais, Bruno, 4260 Avennes (BE); Ricardou, Geoffroy, 1040 Etterbeek (BE)
(74) Mandataire: Pronovem

(56) Documents cités:
- EP-A1- 2 199 614
- WO-A2-01/31235
- FR-A1- 2 936 273
- GB-A- 736 017
- JP-A- 2005 344 680

## Description

### Objet de l'invention

La présente invention se rapporte à un système de lubrification d'une turbomachine et, plus particulièrement, concerne les circuits d'air et d'huile du système de lubrification.

### Etat de la technique

Une turbomachine aéronautique comporte de nombreux éléments nécessitant d'être lubrifiés et refroidis; il s'agit notamment de paliers à roulement utilisés pour supporter les arbres rotatifs, et d'engrenages. Ces éléments sont contenus dans des zones fermées ou étanches appelées enceintes.

Les roulements, engrenages et paliers installés dans les enceintes sont lubrifiés par de l'huile injectée en entrée par un système dit « d'alimentation » et recueillie en sortie par un système dit « de récupération ». Des joints d'étanchéité séparent les enceintes des autres parties de la turbomachine et sont pressurisés à l'aide d'air provenant d'une partie de la turbomachine dite « compresseur ». La pressurisation des joints permet d'éviter une fuite d'huile de l'enceinte vers le reste du moteur à travers les joints en induisant un débit permanent d'air entrant de l'extérieur vers l'intérieur de l'enceinte tout en refoulant l'huile vers l'intérieur. Ces joints dits « dynamiques » permettent donc de contenir dans les enceintes le mélange air/huile ainsi formé. Ce débit d'air prélevé à la turbomachine est fonction de l'efficacité des joints dynamiques et pénalise le rendement de la turbomachine. La majeure partie de l'air introduit dans les enceintes est évacuée à l'extérieur de la turbomachine en empruntant un circuit spécifique destiné à le déshuiler et à contrôler la pression de l'enceinte; les enceintes sont alors dites « ventilées ». L'huile ayant servi à la lubrification dans les enceintes, est récupérée en fond d'enceinte par un système de récupération via un autre circuit spécifique. Afin d'assurer un assèchement complet de l'enceinte, une faible part d'air introduit dans les enceintes est également aspirée par ces systèmes et le mélange air/huile ainsi récupéré doit être séparé avant de renvoyer l'huile purifiée au réservoir.

Un inconvénient d'une architecture dite « ventilée » est dû à la nécessité de prélever une quantité non négligeable d'air compressé par la turbomachine pour pressuriser les enceintes. Une architecture ventilée est également très consommatrice en huile de lubrification car l'efficacité du déshuilage est une fonction décroissante du débit d'air.

Il existe des architectures avec des enceintes dites « non ventilées » où tout l'air entrant par les joints est extrait par le système de récupération d'huile.

Le document EP 1 933 077 A1 présente une telle architecture. Il s'agit d'un système de lubrification d'une turbomachine dans lequel un faible débit d'air est injecté au travers des joints d'étanchéité pour pressuriser les enceintes. L'ensemble de l'air et de l'huile introduits dans les enceintes est récupéré en sortie (partie basse des enceintes) et acheminé vers le séparateur air/huile par gravité et par la différence de pression entre l'intérieur des enceintes et le séparateur. Il est prévu dans ce système d'intégrer une fonction de pompage dans le séparateur air/huile pour aspirer le mélange air/huile vers celui-ci. Une telle fonction peut être rendue nécessaire en cas de trop faible pressurisation des enceintes. L'inconvénient de cette architecture est qu'une seule fonction de pompage risque de ne pas être suffisamment efficace pour un mélange air-huile dans certaines conditions limites telles qu'à bas régime où la pressurisation des enceintes est très faible (cas *ground* idle ou ralenti au sol). D'autre part, une fonction de pompage unique et non régulée peut introduire des débits d'air trop élevés pour certains régimes du moteur par rapport au besoin et induire des surdimensionnements des circuits et des éléments de récupération ainsi qu'une surconsommation d'huile.

Le document US 2005/0217272 A1 divulgue un système de lubrification avec un déshuileur muni d'une capacité d'aspiration. Il s'agit d'une architecture classique où le débit d'air et le débit d'huile sont récupérés par des systèmes séparés en sortie d'enceinte, le système d'aspiration est alors appliqué au seul débit d'air.

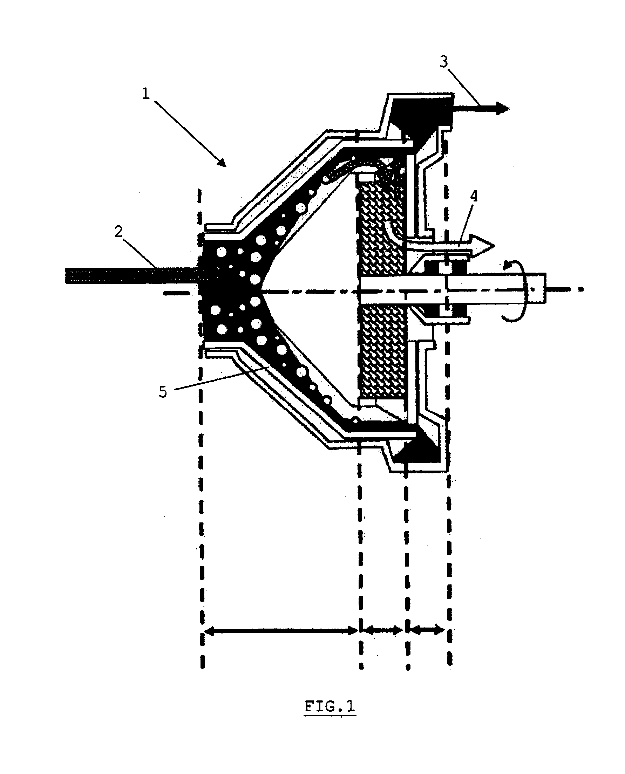

On connaît de la demande EP 2 199 614 A1 une machine de type centrifuge 1, appelée SIPDA pour *Scavenge Integrated Pump* & *DesAerator* et illustrée à la figure 1, comportant des moyens d'aspiration, de pompage et de séparation partielle d'un mélange liquide/gaz 2 (en particulier huile/air), des moyens de séchage et d'évacuation du gaz séparé 4 et des moyens de dégazage et de refoulement du liquide séparé 3.

L'aspiration dans ce séparateur air/huile est assurée par le rouet 5 à l'entrée de la machine mais la présence d'un flux diphasique 2 limite la performance d'aspiration.

### Buts de l'invention

La présente invention vise à s'affranchir des inconvénients de l'état de la technique.

En particulier, la présente invention a pour but de réaliser une architecture avancée d'un système de lubrification où le mélange air-huile d'une enceinte contenant les organes à lubrifier est récupéré par un seul circuit muni d'une capacité d'aspiration suffisante et modulable en fonction du régime du moteur.

La présente invention vise plus particulièrement à fournir une architecture avancée d'un système de lubrification comportant des moyens d'aspiration additionnels et fonctionnels lorsque le moteur tourne à bas régime (conditions *ground idle*), évitant ainsi une aspiration d'air trop importante pour les régimes du moteur où la pressurisation des enceintes est suffisante, évitant par là-même une surconsommation d'huile.

### Résumé de l'invention

La présente invention se rapporte à un système de lubrification d'une turbomachine comportant au moins une enceinte, dite non ventilée, contenant des organes à lubrifier et un mélange d'air et d'huile, ladite enceinte étant fermée et pressurisée à l'aide de joints d'étanchéité dynamiques alimentés en air comprimé pour créer un débit d'air de l'extérieur vers l'intérieur de l'enceinte, ladite enceinte comportant une sortie pour l'acheminement du mélange d'air et d'huile vers un séparateur air/huile, ledit séparateur étant muni d'une fonction d'aspiration favorisant le débit du mélange d'air et d'huile entre l'enceinte et le séparateur, caractérisé en ce que le système de lubrification comporte des moyens d'aspiration additionnels.

Selon des modes particuliers de l'invention, le système de lubrification comporte au moins une ou une combinaison appropriée des caractéristiques suivantes:
- les moyens d'aspiration additionnels sont disposés avant le séparateur air/huile;
- les moyens d'aspiration additionnels sont disposés après le séparateur air/huile;
- les moyens d'aspiration additionnels sont disposés sur une sortie d'air et/ou une sortie d'huile du séparateur air/huile;
- les moyens d'aspiration additionnels comprennent au moins un venturi;
- les moyens d'aspiration additionnels comprennent au moins une pompe de type axial, volumétrique ou centrifuge;
- la pompe et le venturi sont disposés sur une sortie d'air du séparateur air/huile;
- le séparateur air/huile est une machine de type centrifuge comprenant des moyens d'aspiration, de pompage et de séparation partielle du mélange d'air et d'huile, des moyens de séchage et d'évacuation de l'air séparé et des moyens de dégazage et de refoulement de l'huile séparé;
- les moyens d'aspiration additionnels comprennent au moins un venturi et au moins une pompe;
- les moyens d'aspiration additionnels sont configurés pour être uniquement utilisés lorsque la pressurisation de l'enceinte est insuffisante;
- les moyens d'aspiration additionnels sont configurés pour être utilisés lorsque la turbomachine fonctionne à bas régime *(ground idle);*
- la pompe est configurée pour pouvoir être contournée lorsque la fonction d'aspiration additionnelle n'est pas requise;
- la pompe est configurée pour débrayer lorsque la fonction d'aspiration additionnelle n'est pas requise;
- le venturi est configuré pour régler le débit d'air injecté en fonction des régimes moteur.

La présente invention se rapporte aussi à une turbomachine comportant un système de lubrification tel que décrit ci-dessus.

### Brève description des figures

La figure 1 représente l'équipement SIPDA selon l'état de l'art.

La figure 2 représente l'évolution de la pression dans le circuit de lubrification depuis le compresseur jusqu'à la sortie du séparateur air/huile en présence de moyens d'aspiration additionnels selon l'invention.

### Légende:

(1) Machine centrifuge, aussi appelée SIPDA (Scavenge Integrated Pump & DesAerator)
(2) Entrée du fluide diphasique air-huile
(3) Sortie de l'huile
(4) Sortie de l'air purifié
(5) Rouet
(6) Pression extérieure
(7) Pression en sortie du compresseur
(8) Pression en amont des joints d'étanchéité
(9) Pression dans l'enceinte
(10) Pression à l'entrée du séparateur air/huile (SIPDA)
(11) Pression à la sortie du séparateur air/huile (SIPDA)
   (A) Compresseur
   (B) Acheminement entre le compresseur et l'enceinte
   (C) Joint d'étanchéité
   (D) Acheminement entre l'enceinte et le séparateur air/huile (SIPDA)
   (E) Le séparateur air/huile (SIPDA)
   (F) Acheminement entre le séparateur air/huile (SIPDA) et l'extérieur

### Description détaillée de l'invention

La présente invention se rapporte à une architecture avancée d'un système de lubrification dans une turbomachine. Elle se rapporte plus particulièrement à une architecture avec une ou des enceintes non ventilées, c.à.d. une architecture où l'ensemble de l'air entrant par les joints d'étanchéité dans la ou les enceintes est extrait par le système de récupération d'huile. Une architecture de ce type est, par exemple, illustrée dans la demande EP 1 933 077 A1.

Selon la présente invention, chaque enceinte comportant des organes à lubrifier est préférentiellement alimentée avec un faible débit d'air comprimé introduit dans l'enceinte au travers des joints d'étanchéité pour pressuriser l'enceinte, ce débit d'air provenant, par exemple, d'un prélèvement sur le compresseur basse pression mais pouvant également provenir d'un prélèvement sur le compresseur haute pression. Pour au moins une des enceintes, l'ensemble du mélange d'air et d'huile injecté est extrait par une même sortie et est acheminé vers un séparateur air/huile qui est préférentiellement muni d'une fonction d'aspiration. Par exemple, l'équipement de séparation air/huile est de type centrifuge doté d'une capacité d'aspiration telle que dans le SIPDA.

Selon la présente invention, le système de lubrification est muni de moyens d'aspiration additionnels régulés en fonction du régime de fonctionnement du moteur.

### Description d'une forme d'exécution préférée de l'invention

La présente invention sera plus particulièrement et, bien sûr, à titre d'exemple non limitatif, illustrée pour un système de lubrification comportant un séparateur air/huile de type SIPDA.

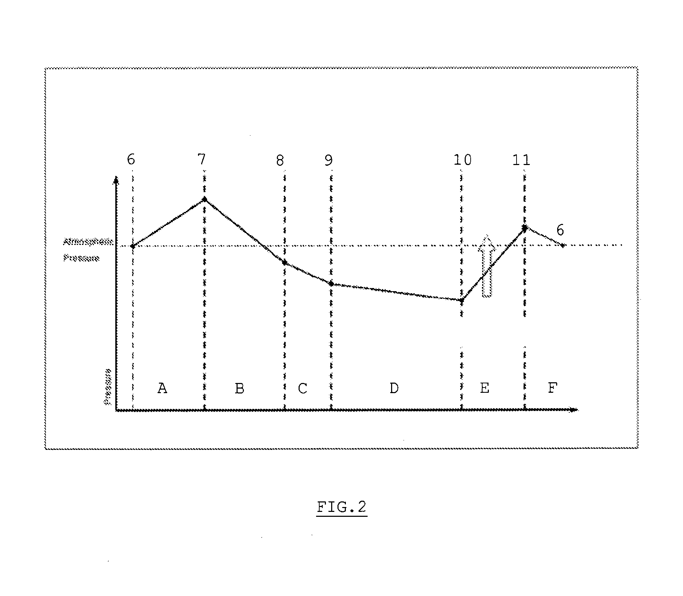

La figure 2 représente l'évolution de la pression dans le circuit de lubrification de la turbomachine aéronautique depuis la prise d'air extérieur à l'entrée 6 du compresseur A jusqu'à la sortie 11 du séparateur air/huile SIPDA E, et ce, à bas régime en conditions ground idle et en présence d'une fonction d'aspiration additionnelle. Le compresseur peut être basse ou haute pression avec une préférence pour un compresseur basse pression. Le détail des références 6 à 11 et A à F est repris dans la légende.

L'air pressurisé récupéré à la sortie 7 du compresseur A est acheminé (ref.B) dans les enceintes pour mettre en pression les joints dynamiques C et assurer un débit vers l'intérieur des enceintes. Le mélange d'air avec l'huile de lubrification réalisé dans une enceinte est ensuite acheminé (ref.D) vers l'équipement SIPDA E afin de séparer l'air de l'huile, acheminer l'air vers l'extérieur de la turbomachine (ref.F) et acheminer l'huile vers un réservoir spécifique. L'acheminement D du mélange air-huile entre l'enceinte et le SIPDA E est réalisé grâce à la surpression générée par le compresseur A. En l'absence de moyens d'aspiration additionnels, le problème qui se pose pour certains régimes et, en particulier, à bas régime tel que dans les conditions ground idle, est que la pression disponible dans le compresseur n'est pas suffisante pour vaincre la perte de charge générée par le circuit, ce qui a pour conséquence, d'avoir une pression d'air en sortie 11 du SIPDA inférieure à la pression atmosphérique 6, empêchant son extraction. Ceci exige donc de créer une aspiration suffisante pour garantir l'évacuation du débit air-huile à bas régime en augmentant la pression à la sortie du séparateur 11, à l'aide de moyens d'aspiration additionnels, tel que schématisé par la flèche dans la figure 2. Cependant, aux autres régimes, cette aspiration ne doit pas rester maximale pour éviter la surconsommation d'huile dans les enceintes.

La présente invention consiste donc à augmenter et éventuellement à moduler la capacité d'aspiration du système de récupération et ce, selon le régime du moteur.

La fonction d'aspiration additionnelle peut être réalisée grâce à différents dispositifs disposés avant ou après le séparateur air/huile.

Selon un premier mode de réalisation, les moyens d'aspiration additionnels sont disposés à la sortie du séparateur air/huile. Les fluides sont donc séparés avant de réaliser la fonction de pompage sur au moins l'un des fluides, préférentiellement l'air, et ainsi améliorer les performances d'aspiration du système de récupération. La fonction de pompage peut être réalisée à l'aide d'une pompe de type axial, volumétrique ou centrifuge ou encore à l'aide d'un venturi utilisant de l'air du compresseur. Préférentiellement, une pompe centrifuge ou axiale, ou un venturi sont disposés sur la sortie d'air du séparateur air/huile afin de ne pas augmenter le débit d'air dans le déshuileur. Ainsi, dans le cas du séparateur SIPDA, la pompe centrifuge ou axiale est disposée en position 4 à la figure 1, sur la sortie d'air du séparateur SIPDA (pour plus de détails sur le fonctionnement SIPDA, cf. la légende et la demande EP 2 199 614 A1).

Selon un second mode de réalisation, les moyens d'aspiration additionnels sont disposés avant le séparateur air/huile. Préférentiellement, les moyens d'aspiration additionnels comprennent un venturi.

Selon l'invention, les différents moyens d'aspiration additionnels sont combinés au sein du système de lubrification. Par exemple, le système de lubrification peut comporter au moins une pompe et au moins un venturi, la ou les pompes étant disposées après le séparateur air/huile et le ou les venturis étant disposés avant ou après le séparateur air/huile.

Selon l'invention, les différents moyens présentés ci-dessus peuvent être mis en oeuvre de manière permanente ou seulement de manière transitoire. Les moyens d'aspiration additionnels peuvent être uniquement utilisés lorsque la pressurisation des enceintes est insuffisante, par exemple, lorsque la turbomachine fonctionne à bas régime (conditions ground idle). A cet effet, le système de lubrification peut comporter des moyens de régulation des dispositifs susmentionnés et, ce, en fonction du régime de fonctionnement du moteur.

Dans le cas d'une pompe, elle peut être contournée via une déviation (by-pass, en particulier pour une pompe volumétrique) ou peut comporter des moyens de débrayage afin de limiter le débit d'air dans les cas où la fonction de pompage n'est pas nécessaire. Dans le cas d'un dispositif venturi, l'aspiration peut être modulée en reglant le débit d'air injecté en fonction des régimes moteur.

### Avantages de l'invention

La fonction d'aspiration additionnelle selon l'invention permet d'assurer une dépression suffisante dans les enceintes et donc de garantir le débit du mélange air-huile du moteur vers le séparateur air-huile, par exemple SIPDA, et garantir l'extraction de l'air déshuilé vers l'extérieur de la turbomachine.

Elle permet également de manière optionnelle de limiter le débit d'air dans les enceintes et donc de limiter le dimensionnement des équipements de récupération et la consommation d'huile.

## Revendications

1. Système de lubrification d'une turbomachine comportant au moins une enceinte, dite non ventilée, contenant des organes à lubrifier et un mélange d'air et d'huile (2), ladite enceinte étant fermée et pressurisée à l'aide de joints d'étanchéité dynamiques alimentés en air comprimé pour créer un débit d'air de l'extérieur vers l'intérieur de l'enceinte, ladite enceinte comportant une sortie pour l'acheminement du mélange d'air et d'huile (2) vers un séparateur air/huile (1), ledit séparateur (1) étant muni d'une fonction d'aspiration favorisant le débit du mélange d'air et d'huile (2) entre l'enceinte et le séparateur (1), **caractérisé en ce que** le système de lubrification comporte des moyens d'aspiration additionnels.

2. Système de lubrification selon la revendication 1, **caractérisé en ce que** les moyens d'aspiration additionnels sont disposés avant le séparateur air/huile (1).

3. Système de lubrification selon la revendication 1, **caractérisé en ce que** les moyens d'aspiration additionnels sont disposés à la sortie du séparateur air/huile (1).

4. Système de lubrification selon la revendication 3, **caractérisé en ce que** les moyens d'aspiration additionnels sont disposés sur une sortie d'air (4) et/ou une sortie d'huile (3) du séparateur air/huile (1).

5. Système de lubrification selon la revendication 2 ou 3, **caractérisé en ce que** les moyens d'aspiration additionnels comprennent au moins un venturi.

6. Système de lubrification selon la revendication 3, **caractérisé en ce que** les moyens d'aspiration additionnels comprennent au moins une pompe de type axial, volumétrique ou centrifuge.

7. Système de lubrification selon la revendication 5 ou 6, **caractérisé en ce que** la pompe et le venturi sont disposés sur une sortie d'air (4) du séparateur air/huile (1).

8. Système de lubrification selon l'une quelconque des revendications précédentes, **caractérisé en ce que** le séparateur air/huile est une machine de type centrifuge (1) comprenant des moyens d'aspiration, de pompage et de séparation partielle du mélange d'air et d'huile (2), des moyens de séchage et d'évacuation de l'air séparé (4) et des moyens de dégazage et de refoulement de l'huile séparé (3).

9. Système de lubrification selon la revendication 5 ou 6, **caractérisé en ce que** les moyens d'aspiration additionnels comprennent au moins un venturi et au moins une pompe.

10. Système de lubrification selon la revendication 1, **caractérisé en ce que** les moyens d'aspiration additionnels sont configurés pour être uniquement utilisés lorsque la pressurisation de l'enceinte est insuffisante.

11. Système de lubrification selon la revendication 10, **caractérisé en ce que** les moyens d'aspiration additionnels sont configurés pour être utilisés lorsque la turbomachine fonctionne à bas régime (*ground idle*).

12. Système de lubrification selon la revendication 6, **caractérisé en ce que** la pompe est configurée pour pouvoir être contournée lorsque la fonction d'aspiration additionnelle n'est pas requise.

13. Système de lubrification selon la revendication 6, **caractérisé en ce que** la pompe est configurée pour débrayer lorsque la fonction d'aspiration additionnelle n'est pas requise.

14. Système de lubrification selon la revendication 5, **caractérisé en ce que** le venturi est configuré pour régler le débit d'air injecté en fonction des régimes moteur.

15. Turbomachine comportant un système de lubrification selon l'une quelconque des revendications 1 à 14.

## Patentansprüche

1. Schmiersystem für ein Turbotriebwerk, das mindestens einen nicht belüfteten Behälter aufweist, der zu schmierende Organe und ein Luft-Öl-Gemisch (2) enthält, wobei der Behälter geschlossen ist und mit Hilfe dynamischer Dichtungen unter Druck steht, die mit Druckluft versorgt werden, um einen Luftdurchsatz von außen nach innen des Behälters zu schaffen, wobei der Behälter einen Ausgang für die Beförderung des Luft-Öl-Gemischs (2) zu einem Luft-Öl-Abscheider (1) aufweist, wobei der Abscheider (1) mit einer Ansaugfunktion ausgestattet ist, die den Durchsatz des Luft-Öl-Gemischs (2) zwischen dem Behälter und dem Abscheider (1) fördert, **dadurch gekennzeichnet, dass** das Schmiersystem zusätzliche Ansaugmittel aufweist.

2. Schmiersystem nach Anspruch 1, **dadurch gekennzeichnet, dass** die zusätzlichen Ansaugmittel vor dem Luft-Öl-Abscheider (1) angeordnet sind.

3. Schmiersystem nach Anspruch 1, **dadurch gekennzeichnet, dass** die zusätzlichen Ansaugmittel am Ausgang des Luft-Öl-Abscheiders (1) angeordnet sind.

4. Schmiersystem nach Anspruch 3, **dadurch gekennzeichnet, dass** die zusätzlichen Ansaugmittel auf einem Luftausgang (4) und/oder einem Ölausgang (3) des Luft-Öl-Abscheiders (1) angeordnet sind.

5. Schmiersystem nach Anspruch 2 oder 3, **dadurch gekennzeichnet, dass** die zusätzlichen Ansaugmittel mindestens ein Venturi umfassen.

6. Schmiersystem nach Anspruch 3, **dadurch gekennzeichnet, dass** die zusätzlichen Ansaugmittel mindestens eine volumetrische oder Zentrifugal-Pumpe axialen Typs umfassen.

7. Schmiersystem nach Anspruch 5 oder 6, **dadurch gekennzeichnet, dass** die Pumpe und das Venturi auf einem Luftausgang (4) des Luft-Öl-Abscheiders (1) angeordnet sind.

8. Schmiersystem nach einem der vorangehenden Ansprüche, **dadurch gekennzeichnet, dass** der Luft-Öl-Abscheider eine Maschine vom Zentrifugaltyp (1) ist, die Ansaug-, Pump- und partielle Abscheidemittel des Luft-Öl-Gemischs (2), Trocknungs- und Ableitungsmittel der abgeschiedenen Luft (4) und Entgasungs- und Fördermittel des abgeschiedenen Öls (3) umfasst.

9. Schmiersystem nach Anspruch 5 oder 6, **dadurch gekennzeichnet, dass** die zusätzlichen Ansaugmittel mindestens ein Venturi und mindestens eine Pumpe umfassen.

10. Schmiersystem nach Anspruch 1, **dadurch gekennzeichnet, dass** die zusätzlichen Ansaugmittel konfiguriert sind, um nur dann verwendet zu werden, wenn die Druckbeaufschlagung in dem Behälter unzureichend ist.

11. Schmiersystem nach Anspruch 10, **dadurch gekennzeichnet, dass** die zusätzlichen Ansaugmittel konfiguriert sind, um verwendet zu werden, wenn das Turbotriebwerk mit geringer Leistung (ground idle) arbeitet.

12. Schmiersystem nach Anspruch 6, **dadurch gekennzeichnet, dass** die Pumpe konfiguriert ist, um umgangen zu werden, wenn die zusätzliche Ansaugfunktion nicht erforderlich ist.

13. Schmiersystem nach Anspruch 6, **dadurch gekennzeichnet, dass** die Pumpe konfiguriert ist, um auszukuppeln, wenn die zusätzliche Ansaugfunktion nicht erforderlich ist.

14. Schmiersystem nach Anspruch 5, **dadurch gekennzeichnet, dass** das Venturi konfiguriert ist, um den Durchsatz der eingeleiteten Luft in Abhängigkeit von den Motorleistungen zu regeln.

15. Turbotriebwerk, das ein Schmiersystem nach einem der Ansprüche 1 bis 14 aufweist.

## Claims

1. A system for lubricating a turbomachine comprising at least one enclosure, called non-ventilated, with members to be lubricated and an air-oil mixture (2), said enclosure being closed and pressurized using dynamic pressure seals supplied with compressed air to create an airflow from the outside toward the inside of the enclosure, said enclosure comprising an outlet for conveying the air-oil mixture (2) toward an air/oil separator (1), said separator (1) being provided with an suction function favoring the flow of the air-oil mixture (2) between the enclosure and the separator (1), **characterized in that** the lubrication system comprises additional suction means.

2. The lubrication system according to Claim 1, **characterized in that** the additional suction means are arranged before the air/oil separator (1).

3. The lubrication system according to Claim 1, **characterized in that** the additional suction means are arranged at the outlet of the air/oil separator (1).

4. The lubrication system according to Claim 3, **characterized in that** the additional suction means are arranged on an air outlet (4) and/or on an oil outlet (3) of the air/oil separator (1).

5. The lubrication system according to Claim 2 or 3, **characterized in that** the additional suction means comprise at least one venturi.

6. The lubrication system according to Claim 3, **characterized in that** the additional suction means comprise at least one pump of the axial, volumetric or centrifuge type.

7. The lubrication system according to Claim 5 or 6, **characterized in that** the pump and the venturi are arranged on an air outlet (4) of the air/oil separator (1).

8. The lubrication system according to any one of the preceding claims, **characterized in that** the air/oil separator is a machine of the centrifuge type (1) comprising means for the suction, pumping, and partial separation of the air-oil mixture (2), means for drying and evacuating the separated air (4) and means for degassing and forcing back the separated oil (3).

9. The lubrication system according to Claim 5 or 6, **characterized in that** the additional suction means comprise at least one venturi and at least one pump.

10. The lubrication system according to Claim 1, **characterized in that** the additional suction means are configured to be used only when pressurization of the enclosure is insufficient.

11. The lubrication system according to Claim 10, **characterized in that** the additional suction means are configured to be used when the turbomachine operates at low rating (ground idle).

12. The lubrication system according to Claim 6, **characterized in that** the pump is configured to be possibly bypassed when the additional suction function is not required.

13. The lubrication system according to Claim 6, **characterized in that** the pump is configured to disengage when the additional suction function is not required.

14. The lubrication system according to Claim 5, **characterized in that** the venturi is configured to adjust the injected airflow according to the engine ratings.

15. A turbomachine comprising a lubrication system according to any one of Claims 1 to 14.
